# EUROPEAN PATENT SPECIFICATION

(11) **EP 1 102 006 B1**
(45) Date of publication and mention of the grant of the patent: **14.09.2005**
(21) Application number: 00310202.7
(22) Date of filing: 16.11.2000
(51) Int. Cl.: F23L 11/02, F23L 13/02, F16K 1/22, F16K 31/08

(54) **Improvements in or relating to valve control**
Verbesserungen in Bezug auf Ventilsteurung
Amelioration pour la régulation des clapets

(30) Priority: 19.11.1999 GB 9927286
(43) Date of publication of application: 23.05.2001
(73) Proprietor: Euroheat Distributors (H.B.S.) Ltd., Worcestershire WR6 5AY (GB)
(72) Inventor: Holden, Simon Nicholas, Suckley, Worcester WR6 5DF (GB); Nunn, Nigel Paul, Leominster HR6 8QT (GB)
(74) Representative: Mosey, Stephen George

(56) References cited:
- DE-A- 4 401 585
- FR-A- 2 667 929
- GB-A- 1 556 533
- GB-A- 2 197 456
- US-A- 5 662 309

## Description

This invention relates to improvements in or relating to valve control, principally in conjunction with a fuel burner, and particularly to control means for supplying air to a flue which conveys combustion products from a fuel burner, in use.

In an oil-burning stove, the liquid fuel is fed to a burner where it is heated and vaporized. As the vapour rises it draws into the burner body air necessary for combustion. Combustion air is also induced into the burner body by the difference in temperature, and hence density, between the air outside the stove's combustion chamber and flue system, and the hot products of combustion within said chamber and flue. The heat output of the burner is controlled by a fuel metering valve which has a variable flow rate to provide differing firing rates within the stove, and relies upon the differing temperatures within the flue given by these firing rates to induce the correct amount of air into the burner to provide satisfactory combustion.

Whilst it is possible to calculate the amount of negative pressure necessary within the combustion chamber/flue of the stove to provide the correct air flow into the burner for any rate of fuel supply, the system cannot operate without additional control of the flue draught, since the flue's performance is affected by its height, its resistance to flow, heat loss and wind affect.

By limiting the heat taken from the products of combustion and by specifying a minimum height for the flue, it is possible to ensure that the burner will always have sufficient air, with any excess air being limited, provided a draught or flue stabilizer (barometric damper) is fitted to the flue.

A known form of flue stabilizer comprises a counterbalanced flap which opens to provide an additional air supply to the flue/combustion chamber of the stove whenever the flue's negative pressure reaches its upper limit, and so checks any rise beyond this limit to maintain the correct negative pressure within the stove. The additional air can spill directly into the stove's combustion chamber. The opening of the flap can be set to a predetermined pressure by adjusting the position of a counterbalance weight carried by the flap.

Where the flue is either subjected to prolonged strong winds, or the flue itself is of higher efficiency than normal, the stabilizer may be unable to supply sufficient air to reduce the negative pressure adequately. This device provides only a very limited control of the airflow, and as it will be set to the maximum pressure allowable, the burner will be operating with uncontrolled airflow at all but its maximum firing rate. This stabilizer is ideal where the combustion process operates at a single firing rate, or where the combustion air is supplied by a high pressure fan, but is totally inappropriate for a natural draught device operating at more than one firing rate.

DE 44 01 585A discloses a throttle unit for an intake channel of an IC engine, comprising a pivoted throttle flap of permanently magnetic substance in a housing having fixed, opposed permanent or electro-magnets arranged to set the flap in any desired position by means of the magnetic systems, or fully closed.

An object of the invention is to provide an improved control means for a fluid flow opening and also an improved heating apparatus incorporating same.

According to a first embodiment of the invention there is provided a valve adapted to be mounted, in use, at a fluid flow opening, and comprising a frame which pivotally mounts a movable element which can open or close said opening, with part of the movable element closing against the frame when said opening is closed, in use, and a magnet for providing a magnetic field, and disposed at a side of the frame opposite to that against which the movable element closes, the strength and/or the affect of which magnetic field on the movable element can be varied to alter resistance of said element to movement thereof, characterised in that the magnetic means is movable between one extreme position where it is fully shielded from said moveable element by the frame, and thus has minimum effect on opening of the moveable element, and another extreme position where it is unshielded from said movable element by the frame, and thus has maximum effect on opening of the movable element.

Preferably the movable element of the valve has counterbalance means which set the opening of the valve at a predetermined pressure differential across the fluid flow opening when the strength of the magnetic field and/or its affect on the movable element is adjusted to zero. Desirably the magnetic means is an electro-magnet, and more desirably the magnetic field strength of the electromagnet can be varied from zero to an upper set value by means of a potentiometer.

Most advantageously the valve controls the supply of air to a flue or combustion chamber associated with a fuel burner, and the variation in the strength of the magnetic action on the movable member is proportional to the rate of supply of fuel to the burner. By this means the correct negative pressures within the flue or combustion chamber are provided, and hence the correct air supply to the burner is ensured at all firing rates.

According to a second embodiment of the invention there is provided a heating apparatus comprising a fuel burner, a combustion chamber, a flue for passage of combustion products leaving the combustion chamber, in use, and a draught/flue stabilizer for supplying exterior air to the combustion chamber and/or flue, characterised by the stabilizer comprising a valve as claimed in said first embodiment of the invention.

Preferably the variation in the strength of the magnetic action on the movable element is proportional to the flow rate of fuel supplied to the burner.

The invention will now be described, by way of example, with reference to the accompanying drawings, in which:
Figure 1 is a schematic interior view of a known heating appliance which is modified according to one aspect of the present invention,
Figures 2a - 2c are diagrammatic views of a flue stabilizer of the appliance of Figure 1 in three different operating states,
Figure 3 is a front view of part of a flue stabilizer of one aspect of the present invention,
Figure 4 is a side view of parts of the flue stabilizer of Figure 3,
Figures 5 and 6 are respectively an end view and a side view of a further part of the flue stabilizer,
Figures 7 and 8 are an end view and a side view respectively of an adjustable magnet holder which fits in the further part shown in Figures 5 and 6,
Figure 9 is a front view of the flue stabilizer incorporating the components of
Figures 3 to 8,

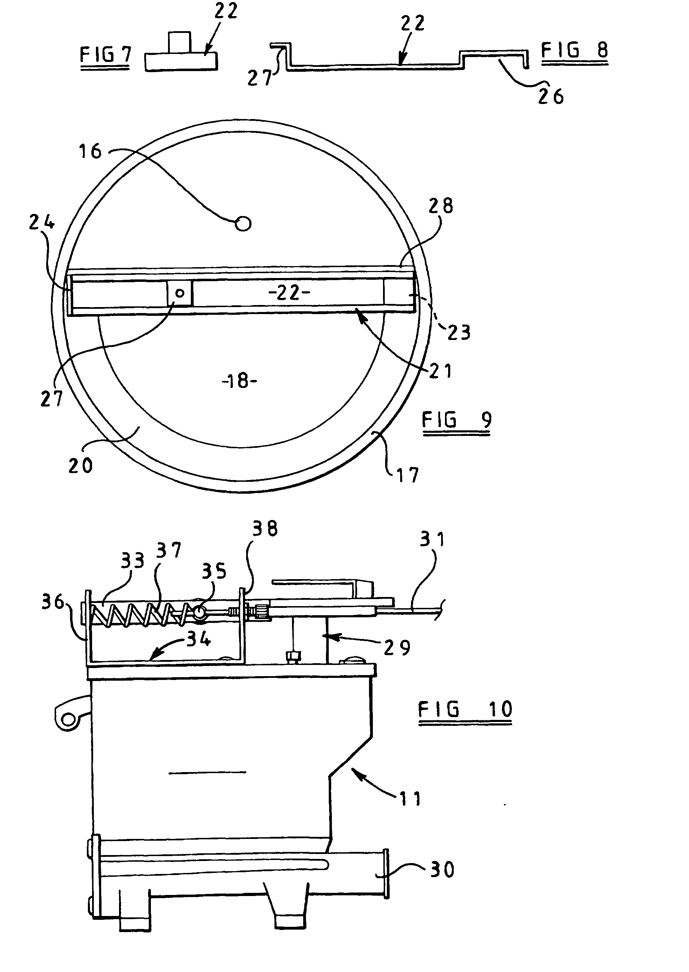

Figure 10 is a side view of a fuel control valve for use with the flue stabilizer of the invention,

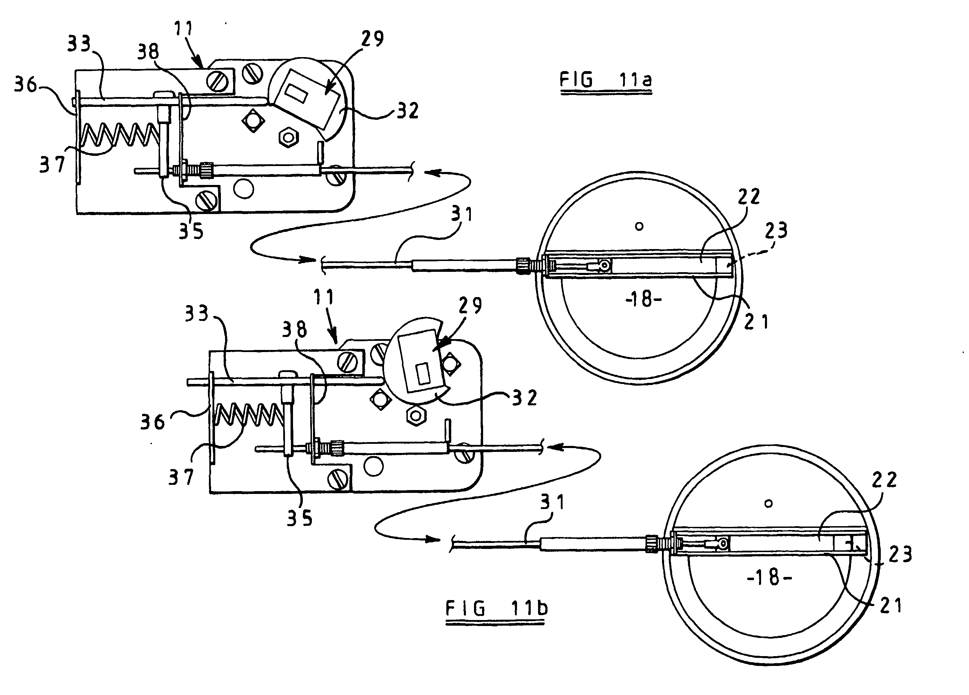

Figures 11a - 11c are schematic views of different stages respectively of operation of the control valve of Figure 10 with the flue stabilizer,
Figure 12 is a front view, like Figure 3, of part of a further embodiment of the flue stabilizer,

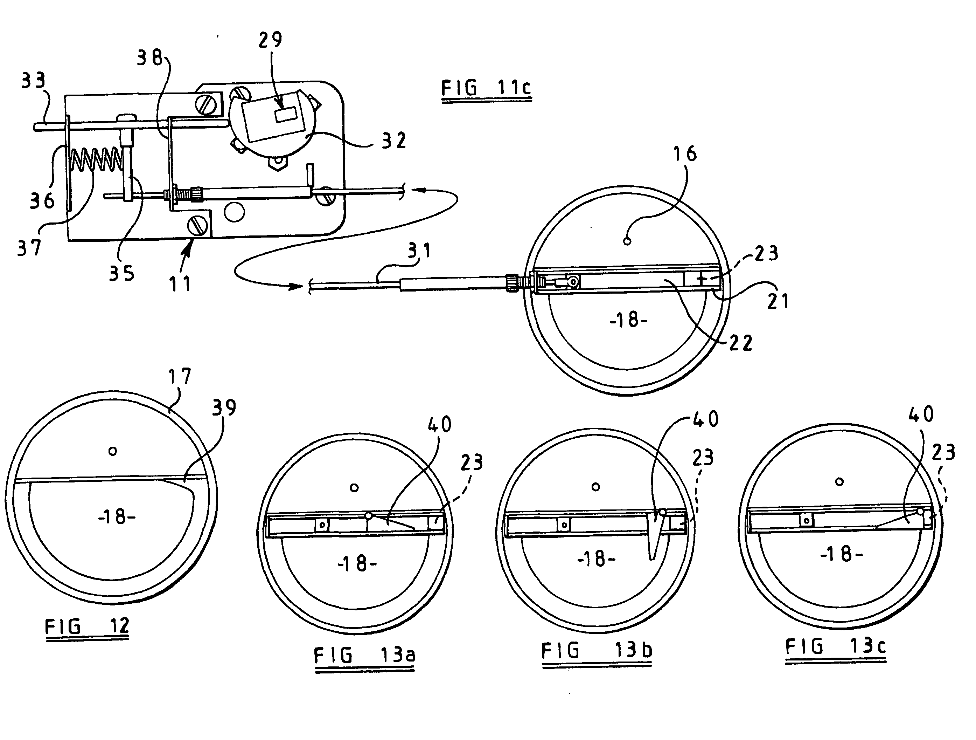

Figures 13a - 3c respectively are front views of part of a still further embodiment of flue stabilizer, with an iron backing in alternative positions,

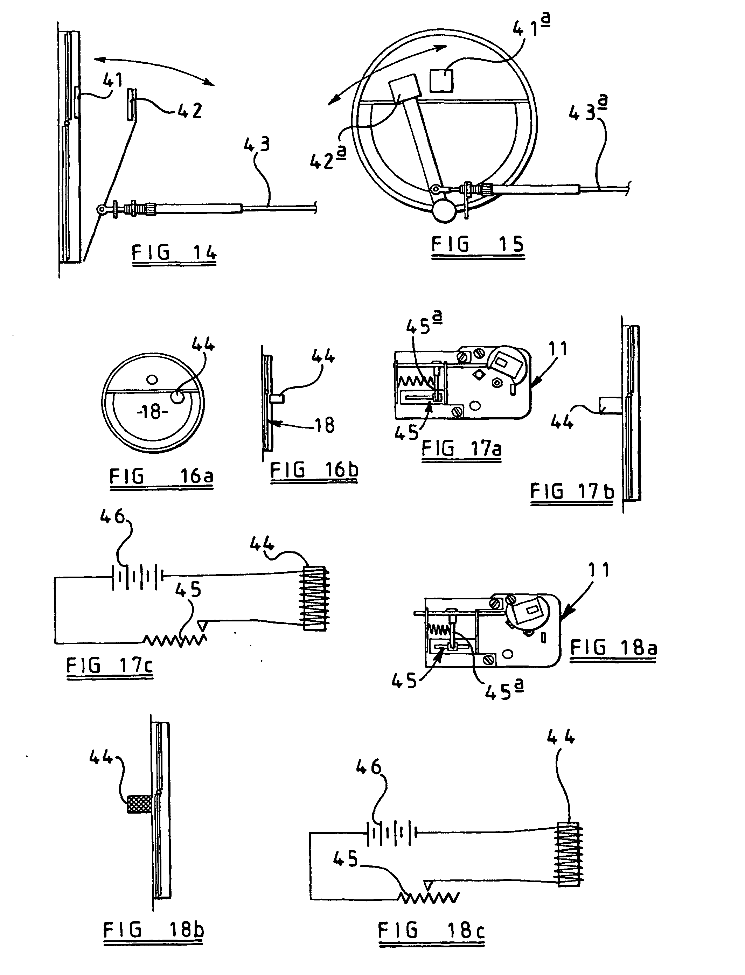

Figure 14 is a side view of part of another embodiment of a flue stabilizer of the invention,
Figure 15 is a front view of part of a yet still further embodiment of a flue stabilizer,
Figures 16a and 16b are respectively a front view and a side view of part of a flue stabilizer incorporating an electro-magnet,
Figures 17a - 17c are respectively a top view of a control valve, a side view of said part of the flue stabilizer, and an electromagnetic control circuit of the flue stabilizer incorporating said electro-magnet, in a de-energised state,
Figures 18a - 18c are the same views as in Figures 17a - 17c, but with the electro-magnet energised,

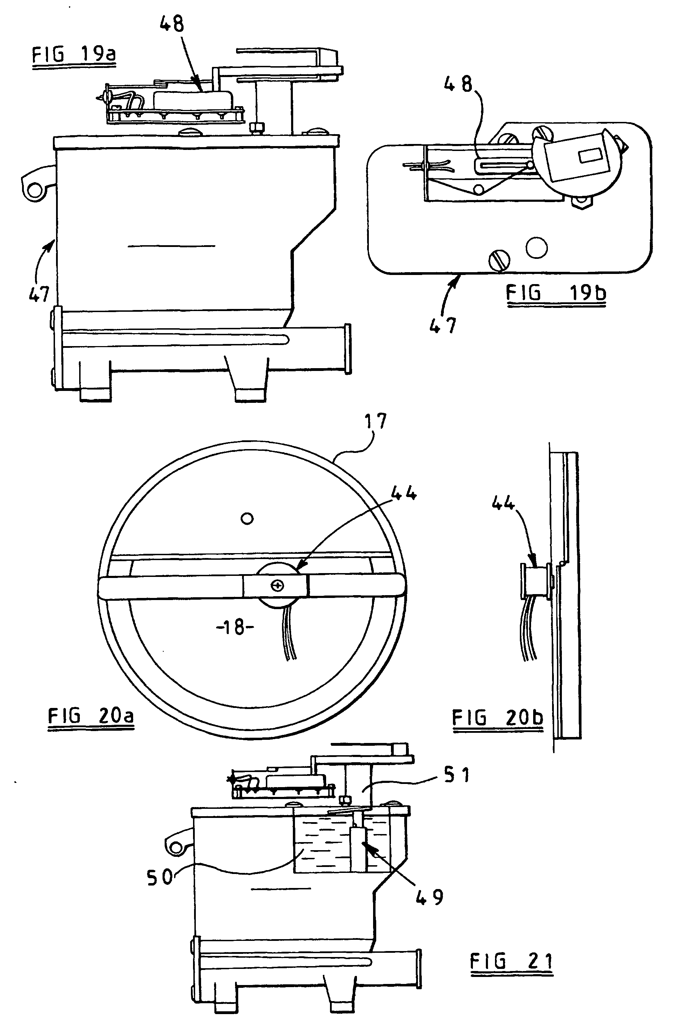

Figures 19a and 19b are respectively a side view and a top view of another embodiment of a fuel control valve for use with the flue stabiliser of the invention,
Figures 20a and 20b are respective views similar to Figures 16a and 16b showing in more detail part of a flue stabiliser incorporating an electro-magnet,
Figure 21 is a side view of the valve of Figures 19a and 19b with part shown cut away to illustrate its oil reservoir and oil flow control arrangement,

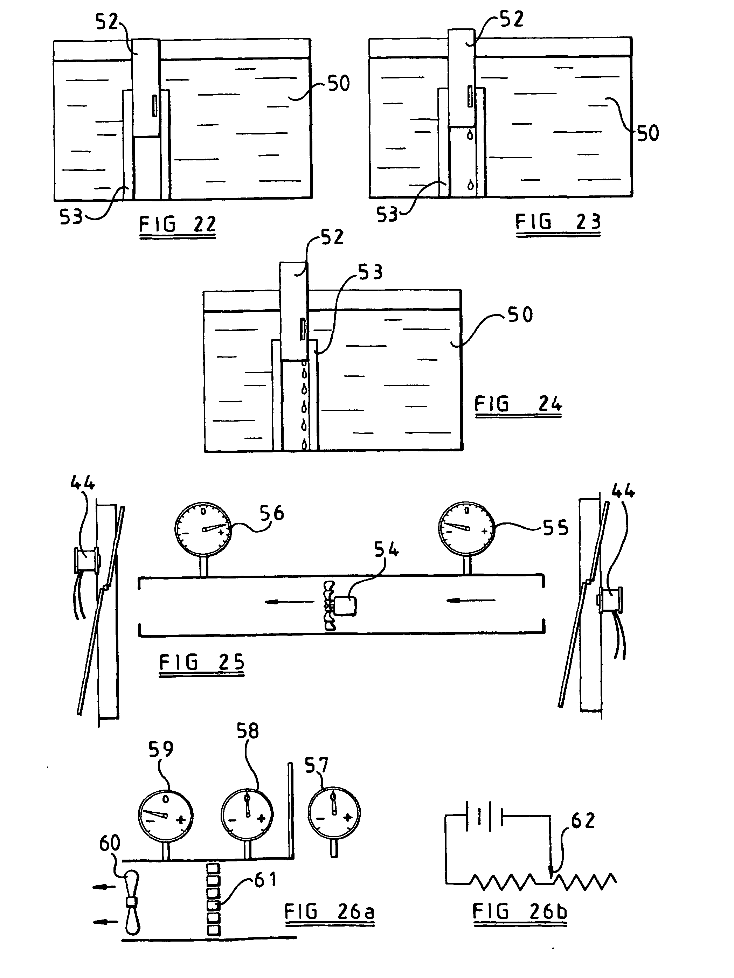

Figures 22 to 24 respectively show the settings of valve components for different rates of flow of oil from the valve,
Figure 25 shows a schematic arrangement, using two valves of the invention, for limiting both the negative and positive pressures at respective ends of a duct,

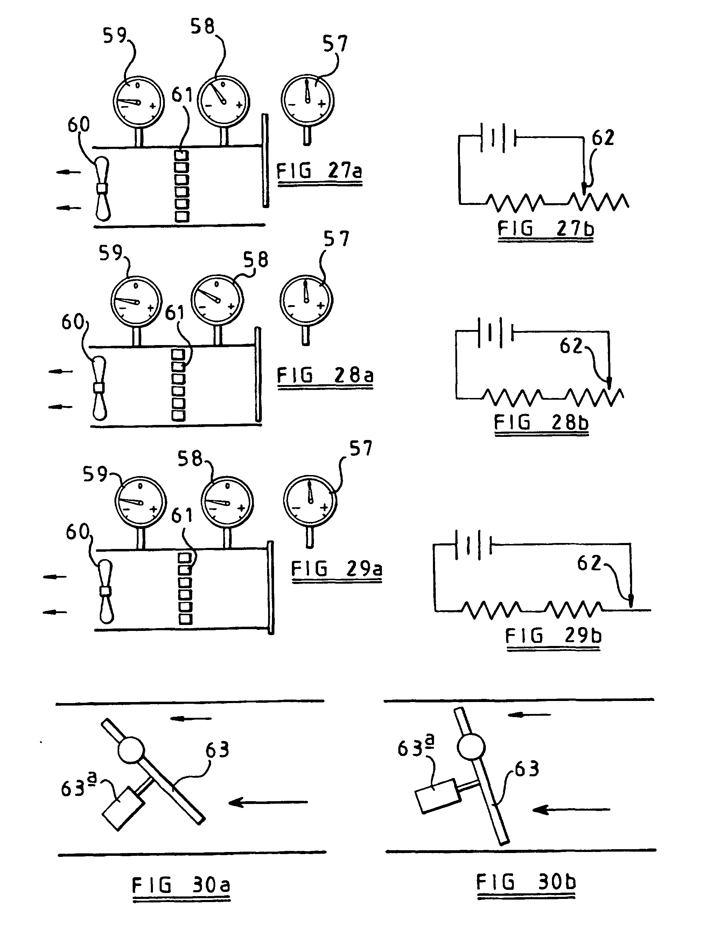

Figures 26a to 29a inclusive schematically show how a valve of the invention can be used to allow a progressive variation of air into a device,
Figures 26b to 29b show equivalent electrical circuits for Figures 26a to 29a respectively,
Figures 30a and 30b schematically show the use of a biased flap, where the airflow closes the venting area,

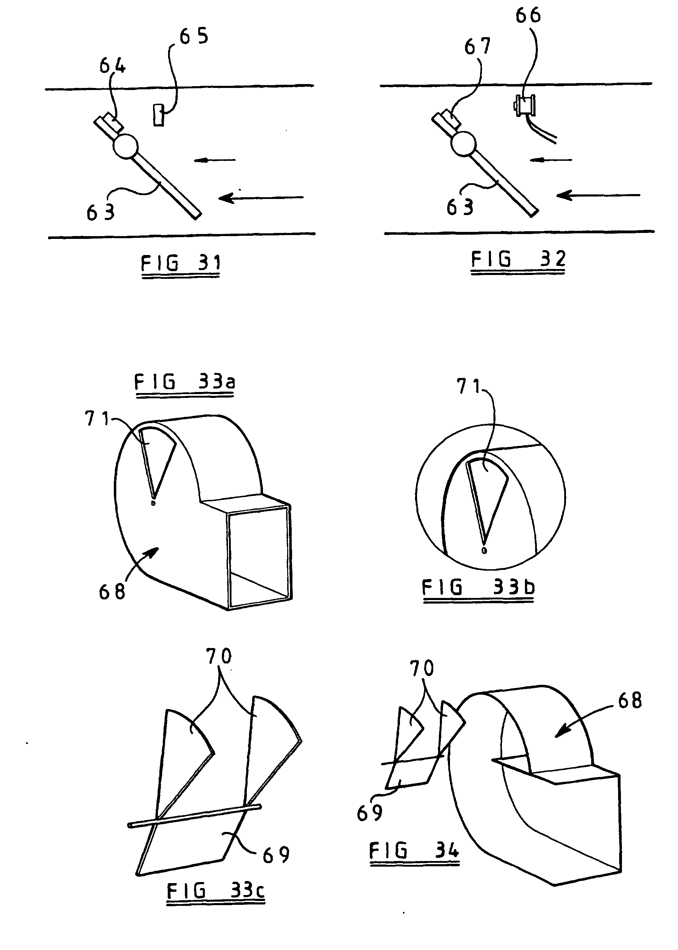

Figure 31 is a view similar to Figures 30a and 30b showing the use of opposed permanent magnets,
Figure 32 is a view equivalent to Figure 31, but showing the use of an electro-magnet as one of the magnets,
Figure 33a is a perspective view of a housing of an air restriction device,
Figure 33b is an enlarged scrap view of part of the housing, showing an air inlet,
Figure 33c is a view of a movable flow control member of a valve of the invention, which is to be fitted in the housing,
Figure 34 is a cut-away view showing the flow control member orientated relative to the housing,

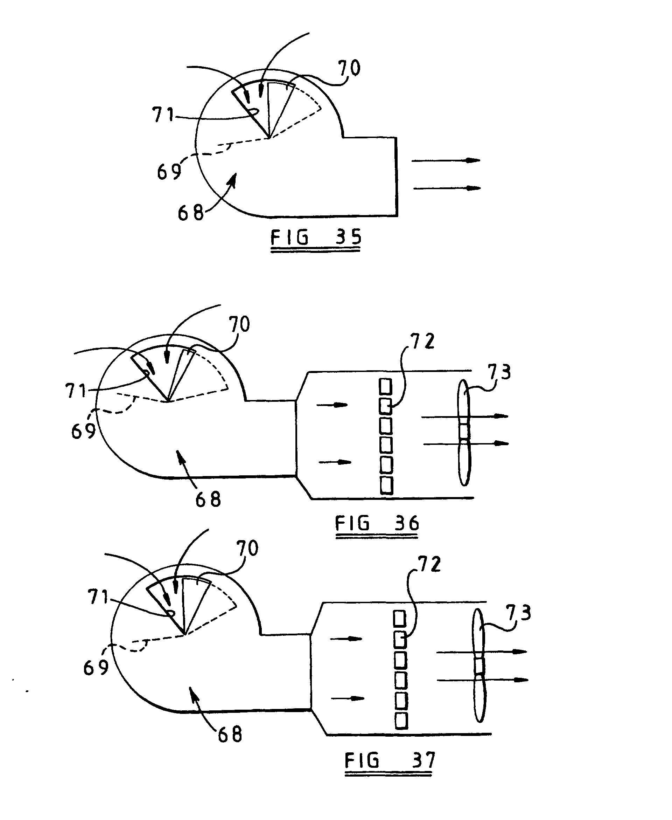

Figure 35 is a side view of the housing with the flow control member fitted therein, and
Figures 36 and 37 respectively are schematic views showing an inlet air control system restricting the air to a burner, the system including the housing and with its flow control member in two different positions, so as to vary airflow through the housing air inlet.

For convenience the aspects of the present invention will be described below in relation to a flue stabilizer in a heating appliance where a burner thereof is supplied with liquid fuel. It is to be understood that the heating appliance could be supplied with other than a liquid fuel, such as oil, for example a gaseous fuel such as mains or bottled gas. Moreover the basic flap valve described in relation to the heating appliance flue need not necessarily be employed in a flue, and could, in its broadest aspect, be applied to any form of valve, i.e. where it controls flow through an opening from one side thereof to the other.

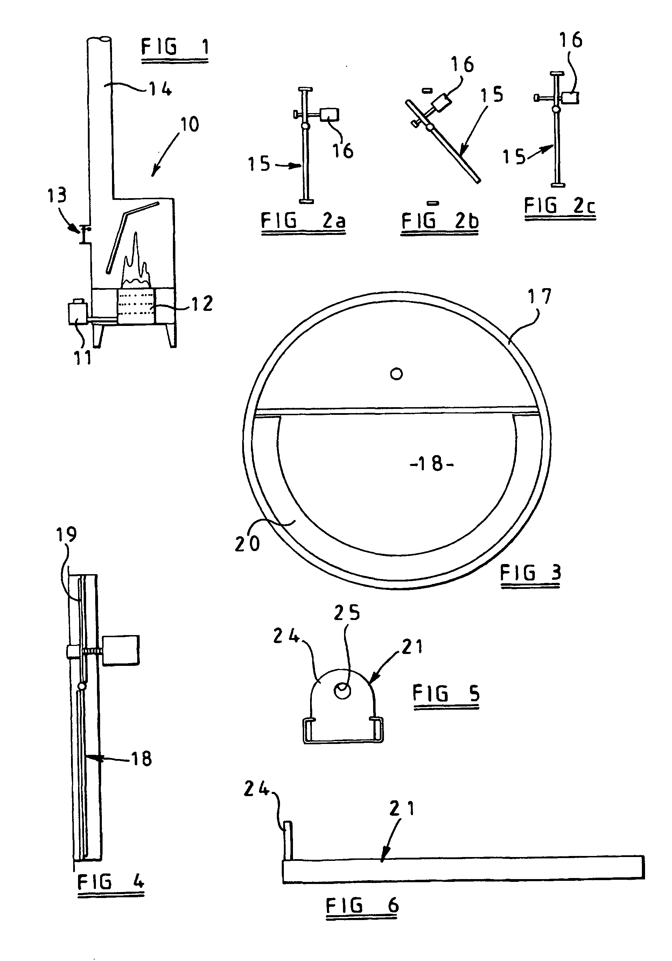

Figure 1 shows a liquid fuel burning stove, for example an oil stove, denoted by the numeral 10, in which a fuel control valve 11 provides a flow of oil to a burner 12 where the heat of the burner vaporizes the fuel. Holes positioned around the burner wall allow the entry of air which mixes with the fuel vapour, providing the necessary oxygen for the combustion of the fuel. Control of the valve 11 by a user is facilitated by any suitable means, for example a rod extending from the control valve 11 to a control knob which allows easy manual operation and adjustment of the valve 11 at a convenient position at or adjacent the stove in the known manner.

As described in the introduction to this specification, in relation to prior art stoves of this type, it is necessary to provide a flue stabilizer 13 which operates to provide an additional air supply to the flue.

With the known arrangement of flue stabilizer, the device consists of a counterbalanced flap 15 which is horizontally pivoted as shown in Figures 2a - 2c at the opening to the flue/combustion chamber of the stove, this flap allowing air to spill directly into the combustion chamber or the flue if the negative pressure therein exceeds a limit. This can be set to a predetermined pressure by adjusting the counterbalance weight 16, as shown, for example, for the two positions of Figures 2a and 2c respectively.

Again as explained in the introduction, this type of device provides only a very limited control of the airflow, and as it will be set to the maximum pressure allowable, the burner will be operating with uncontrolled airflow at all but its maximum firing rate. The present invention, in one aspect, relates to a device which can overcome this disadvantage, having the ability to provide the correct negative pressures within the combustion chamber/flue, and hence the correct air supply to the burner, at all firing rates. It allows a typical draught stabilizer to be set to open when the burner is operating at its minimum firing rate and the pressure required to achieve perfect combustion is exceeded, and to have this set point of opening increased in direct proportion to the increase in fuel valve flow rate until the maximum draught requirement is maintained when the burning rate of the burner is at maximum.

Figures 3 and 4 show a typical known draught stabilizer 13 which has a round frame 17 within which a steel flap 18 is horizontally pivotally hinged to close against offset part-annular faces 19 and 20. By attaching the assembly shown in Figures 5 to 8 to the stabilizer frame, a magnet can be mounted thereat, and moved, from a position where its magnetic field is shielded from the flap by the frame, inwards towards the centre of the stabilizer, where, as the magnet moves across, the shielding of the frame is reduced and its magnetic attraction towards the steel hinged flap increases, making the flap more resistant to being opened.

By controlling the progression of the magnet across the stabilizer by means of the fuel valve's flow rate adjustment, the airflow induced into the burner is linked to, and governed by, the fuel flow setting. Various options for positioning the magnet in proportion to the fuel valve setting are possible, but in the embodiment described below, this is achieved with a control cable operated by a cam attracted to the fuel valve's control knob. With differing cam profiles and magnet strengths it is possible to achieve the airflow requirements of differing burner sizes, at all burning rates. To commission the stove, the fuel valve is set to minimum flow, which also sets the magnet to the position where its influence on the flap is zero because it is shielded by the frame, and a counterbalance weight adjusted to give the correct pressure required for the minimum air requirement. The movement of the magnet and the flap's attraction towards it ensures that the air pressure remains correct for each fuel valve flow setting.

Figures 5 and 6 show a carriage 21 of non-magnetic brass, and together with a magnet holder 22, of the same material, shown in Figures 7 and 8, it is possible to mount the permanent magnet 23 (shown in Figures 11a-11c) movably at the flue stabilizer.

The carriage 21 is of elongate form, having a cross-section of rectangular lipped-channel configuration, one end of the channel having an upstand 24 through which extends a hole 25 for a cable fixing to be described hereinafter. The magnet holder or slide bar 22 shown in Figures 7 and 8 is a one piece component which is of generally rectangular form in plan, having a width so that it can be received in the channel-section of the carriage 21 as a close sliding fit, as shown in Figure 11a-11c. The holder 22 has a downwardly facing pocket 26 formed at its one end to receive the magnet 23 securely therein, whilst at its other end the holder has an inverted L-shaped upstand 27, the shorter limb of which acts as a fixture point for the end of a cable to be described hereinafter, which is operated to move the holder 22 back and forth along the carriage. As will be appreciated, the magnet holder 22 is initially inserted into the carriage 21 through an open end thereof, the lips of the carriage 21 thereafter acting to retain the holder 22 against sideways removal. Instead of the full magnet 23, it would be possible to use a magnet half the size, with the remainder of the pocket being filled by a 'dummy' block, for example of aluminium.

Figure 9 shows the magnet holder 22 received in the carriage 21, with the carriage being mounted onto the pivot/cross-bar 28 of the stabilizer frame. However it will be appreciated that other suitable means can be provided at the stabilizer frame for mounting the carriage 21 thereto in a fixed position.

The mechanism for transmitting the fuel valve's delivery rate to the magnet is incorporated with the fuel control valve 11 as shown in Figure 10. This is basically a standard fuel control valve 11 having a control knob 29 which is rotatable to vary the amount of fuel, i.e. oil, supplied to the burner, the valve 11 having a valve inlet 30 and a valve outlet (not shown). With this aspect of the present invention, the rotary movement of the control knob 29 is converted into a linear motion which is transmitted to a control cable 31, such as a Bowden cable, or the like. As shown in Figures 10 and 11, a cam 32 is arranged to rotate with the control knob 29, and its surface is contacted by a rod 33 which is mounted for sliding movement by means of a U-shaped frame 34 fixed to the top of the control valve 11. The rod carries a shaft 35 at right angles thereto, and between this shaft 35 and a leg 36 of the frame 34 is connected a coiled compression spring 37. In this way rotation of the control knob in a direction to increase the oil flow rate to the burner causes the rod 33 to slide along its frame 34, against the force of the compression spring 37, and thus move the shaft 35 linearly in a direction away from the other leg 38 of the frame 34, which mounts a support for the cable 31, an end of which is connected to the shaft 35. Thus as the shaft 35 moves linearly away from the leg 38, the cable is pulled. As shown in Figures 11a-11c, a further cable mount is fixed to the upstand 24 through the hole 25 thereof, and from this mount extends the other end of the cable 31 which is secured to the top of the upstand 27 by a screw or similar fixing. Accordingly when the cable is pulled by the linear movement of the shaft 35, the magnet holder 22, with the magnet 23 in the pocket 26 thereof, is slidingly moved to the left as viewed in Figures 11a-11c, return movement of the holder 22 in the carriage 21, being effected by the force of the spring 37 on the shaft 35 when the control knob 29 is turned in the opposite direction to reduce the oil flow rate.

Figure 11a shows the valve at its minimum flow rate, with the magnet 23 positioned so that its magnetic effect is completely shielded from the flap 18 in that it lies at the end of the carriage 21 where the face 20 is between the carriage and the flap. It can be seen that in this position the cam is engaged by the rod 33 with the spring 37 in its most extended state, and with the shaft 35 at its closest position of approach to the leg 38. In this position, the pressure at which the flap 18 opens is set by the adjustment of the counterbalance weight 16.

Figure 11b shows the position where the control knob 29 has been turned in an anticlockwise direction, with the result that the one end of the rod rides along the outer surface of the cam 32 and is forced to slide to the left, as viewed in the Figure, against the bias of the spring 37. The shaft 35 thus moves to the left also and pulls the cable 31. Consequently the cable force is exerted on the magnet holder 22 which also thus slides to the left, as shown by comparison of the positions of the magnet 23 in Figures 11a and 11b respectively. In this position the shielding of the magnet by the face 20 is reduced, so that the flap is now more influenced by the magnet, and this continues as the control knob is turned to allow higher oil flow rates, so that in the almost full flow rate position of the knob in Figure 11c, the rod 33 is now pushed to its near extreme position to the left with the cable 31 similarly pulling the magnet holder 22 to its near extreme left hand position in the carriage 21 so that the magnet is unshielded by the face 20 and thus exerts a full pull on the flap. In this way the flap becomes more and more resistant to being opened, as the strength of the magnetic action on the flap is varied from zero to a maximum, with the consequent alteration of the resistance of the flap to its opening movement due to negative pressure (vacuum) in the flue/combustion chamber. Accordingly although in this embodiment the strength of the magnet remains the same, the strength of the magnetic field effective on the flap is varied.

The profile of the cam fitted to the valve control knob provides predetermined movement of the magnet from its shielded position, where it has no influence upon the flap, to any position away from the frame to apply a magnetic influence to the movement of the flap, allowing the control of air pressure developed to provide the exact air supply required for the fuel supply rate. Further adjustments to this system can be made using different magnet sizes.

Moreover by adding a profiled extension to the frame, as illustrated in Figure 12, at the numeral 39, the magnetic influence can be applied more gradually to the flap over a longer extent of movement.

Placing an iron backing on the magnet will focus its magnetic field to increase its potential influence on the flap by approximately 30%. Figures 13a-13c show an arrangement where an adjustable iron piece 40 is incorporated into the assembly, for example on the carriage 21, and with this arrangement it is possible to adjust the linearity and ultimate effect of the magnet if the cam profile is not exactly correct in a specific installation. Figures 13a-13c respectively show the iron piece 40 in a different position and orientation in each case.

Positioning the magnet to attract the flap means that its influence is greatest with the flap in the closed position, and utilises the increase in counterbalance bias with increased opening that is normally mechanically built into draught stabilizers.

Figure 14 shows an arrangement of total magnetic control which is possible where two magnets are positioned to oppose each other, there being magnetic control both of the opening point and also the movement allowed to the flap for the degree of over-pressure within the system. Figure 14 shows a magnet 41 at the stabilizer frame and a magnet 42, movement of which is controlled by a cable 43 in the same manner as previously described for the magnet 23. Figure 15 shows an alternative arrangement with two magnets, where the opposing magnet 42a may be moved to the side of the flap-mounted magnet 41a, providing very complex lift points and counterbalanced options. A cable 43a is shown for providing the swinging movement to the magnet 42a.

With both of the opposing magnet options shown in Figures 14 and 15 respectively, it is possible to use the inherent flexibility of the material from which the adjustment arm is manufactured.

In a further, important, embodiment of an aspect of the invention, the permanent magnet may be replaced with an electro-magnet 44. This could, but need not, be movable mechanically, its magnetic strength instead being varied by means of any one of many possible current or voltage control systems, being signalled from the fuel valve control position. Figures 16a and 16b show a possible positioning of such a static electro-magnet relative to the pivot of the flap 18. A very simple form would be to fit a linear potentiometer 45 to the existing cam-operated unit, and Figures 17a and 18a show the fuel control valve 11 with the electro-magnet in an off and a part strength on position respectively. Correspondingly Figures 17b and 18b show the electro-magnet de-energised and (partly) energised respectively, whilst Figures 17c and 18c show a simple electrical circuit including a battery 46, with the electro-magnet 44 and potentiometer slider 45a. From Figure 17c it can be seen that the potentiometer is such that the electro-magnet is de-energised, whilst from the potentiometer arrangement shown in Figure 18c, it will be appreciated that the electro-magnet is at least partly energised, the magnetic field produced being increased as the control knob of the fuel control valve is turned anticlockwise to alter the potentiometer accordingly. This version can allow control in conjunction with other items associated with the heating appliance with which the flue stabilizer is associated, for example room thermostats or pipe thermostats.

Although the characteristics of an electro-magnet and permanent magnet are not identical, they are comparable as applied to the present invention. The problem of changes in electrical resistance with changes of temperature is overcome by using an integrated circuit capable of delivering a constant current, whose value can be made programmable with an external resistor. As illustrated in Figures 19a and 19b, a control valve 47 uses a linear potentiometer 48 to vary the integrated circuit's output. (The word linear is used here referring to the mechanical movement of the wiper across the resistive element and not that of the electrical elements themselves.) However this is not the only solution to controlling the electro-magnet.

As shown in Figures 20a and 20b, the electro-magnet 44 is preferably mounted in a fixed position on the draught stabiliser frame. The current passing through it and hence its magnetic influence is dependent upon the power supply module whose output is controlled by the resistance value of the control valve mounted resistor. The resistance of this resistor is dictated by the position of its slider which is positioned by the cam mounted on the fuel valve's flow rate controlling spindle. The pressure at which the draught stabiliser opens can now be varied to be open at the high limit of the draught requirement for all fuel burning rates electrically.

The purpose of controlling the draught stabiliser electrically is to make the system of magnetically controlling the draught stabiliser compatible with various systems for electrically changing the oil valve's flow rate.

The oil valve 49 shown in Figure 21 maintains a fixed level of oil 50 within its body, and has a flow rate spindle 51. As shown in detail in Figures 22 to 24, the flow rate spindle allows a slotted barrel 52 to vary its height within a sleeve 53 connected to the outlet of the valve. The higher the barrel, the more of the slot length is exposed to the oil within the valve body, increasing the effective outlet orifice. The barrel is spring-loaded and the control spindle 51 allows the spring (not shown) to raise the barrel 52 to the setting of the control spindle. The barrel has at its top an extension piece passing through the top of the valve body and by pushing down on this extension the barrel can be returned to its minimum flow position. When released, the spring will return the barrel to the setting of he control spindle. If the valve is electrically controlled, it is by operating this extension piece. When in a de-energised state the barrel is held at its minimum setting; when energised the barrel is released to allow the spring to lift the barrel to the manually positioned control setting. Since the valve's manual control setting remains constant whilst being overridden by the electrically operated unit, the draught stabiliser has to be electrically operated so as to be independent of the manual setting.

The complexity of accurately controlling fan speed, or reliably controlling vanes, to give proportional control of mechanically induced draught, has made it prohibitively expensive for small installations. With the magnetically influenced draught stabilisers described, it is possible to control the pressure generated by a single speed fan 54 of Figure 25, inexpensively and reliably. This proportional draught control system, with a movable permanent magnet or an electro-magnet, can thus be used in a fanned or fan assisted flue system.

Whilst the system so far described has been for limiting the negative pressure, as shown at the right hand side of Figure 25, it is equally able to limit the positive pressures within a duct by reversing the operation of the stabiliser, to spill air out of the duct at a set pressure, as shown at the left hand side of Figure 25. This may have uses beyond that of flue systems and may even include boiler explosion doors and other pressure limiting devices. The offset and or counterbalanced flap would not be an essential part of such a device. Dials 55 and 56 respectively upstream and downstream of the fan 54 indicate the relative pressures.

So far the draught control system described has been used to control pressure by dilution or spillage, but it can also be used for limiting flow. This would allow the progressive variation of air into a device, giving absolute control rather than a spillage which may in some instances prove to be insufficient to give a controlled limit. Using this system of control it is theoretically possible to control any pressure differences developed by whatever means across a restriction, such as a burner, to give whatever pressure is required. With no inlet restriction, the pressure developed across the restriction of Figure 26a is relative to the difference between the atmospheric pressure and the fan or flue pressure, be it heat, or wind induced. As the inlet is restricted, as shown in Figures 27a and 28a, the pressure drop across the fixed restriction falls, until the point is reached at which the inlet is closed, as shown in Figure 29a, and the pressure drop becomes zero. The Figures all show dials 57 to 59 giving pressure readings at three respective positions upstream of a fan 60, with the first two also upstream of a restriction 61. Figures 26b to 29b respectively show equivalent electrical circuits with a potentiometer slider 62.

A typical system in which attempts to limit flow makes use of a biased flap 63, similar to the draught stabiliser described earlier, but uses the air flow to close the venting area, as shown in Figures 30a and 30b. As with the system already described, one of its practical limitations is that the biasing is by means of a counterbalance weight 63a which remains constant once set. For controlling the air flow variably in this system a magnet could be employed as described earlier or by using opposing magnets 64,65 as in Figure 31, or an electro-magnet 66 opposing a permanent magnet 67 mounted on the flap, as in Figure 32. For the opposing permanent magnets the magnet not mounted on the flap could be progressively re-positioned to give variable influence, and for the electro-magnet the coil could have its electrical current varied. Since the magnetic forces are constantly opposing each other the counterbalance weight is not necessary.

Whilst this system would work satisfactorily, the disadvantage of using a flap arrangement such as this is that it is at its least responsive to air flow when in its open position, but becomes more responsive as it closes and presents more effective area to the air stream. This limits the accuracy of the flap and many designs based on this principal are little more than a high pressure-limiting device.

To provide for proper control, the air restriction must be unaffected by air speed, and Figures 33 to 35 illustrate a suitable device. It consists of a housing 68, and a pivoted flap 69 with wings 70. The wings progressively close the two opposed air inlets, one of which is shown at 71, as the air stream through the housing pushes against the flap. The flap 69 plays no part in the restriction of the airflow, serving only to position the two wings.

The pivoting flap 69 and wings 70 are magnetically biased to give the progressive air pressure changes that may be required. Many possibilities exist for mounting permanent magnets or electro-magnetic coils for attracting or opposing to control the flap's bias. These could be mounted within the housing to act directly on the flap or by extending the flap's axial shaft, and mounting the components outside the housing. Figures 36 and 37 illustrate an inlet air control system restricting the air into a burner or other device requiring a controlled air supply in two different states of restriction respectively, the burner or other device having a restriction 72 upstream of a fan 73.

In an alternative embodiment, a magnet could be fixedly mounted at the end of the flap's axis, e.g. at the left hand end of the axis shown in Figure 34, with another magnet being rotatably mounted on the same axis at a position just outwardly of the first magnet. By rotating the second magnet relative to the first magnet, it is possible to bias the flap in either direction. Any flap could utilise this system.

As previously mentioned, it is considered that the invention, in one aspect, relates generally to control of a valve member, such as a flap, at a fluid flow opening, this having particular application to a flue stabilizer, control of which is preferably (directly) proportional to the amount of fuel being supplied to a burner. In another aspect, the invention relates to a heating appliance or heating apparatus which includes a fuel burner and which incorporates magnetic control of a flue stabilizer in the form of any of the embodiments described herein where a magnetic field can act on the valve member, for example a damper flap, so that resistance of the valve member to movement can be varied as required, with again this variation preferably being (directly) proportional to the amount of fuel supplied to the burner.

## Claims

1. A valve adapted to be mounted, in use, at a fluid flow opening, and comprising a frame (17) which pivotally mounts a movable element (18) which can open or close said opening, with part of the movable element (18) closing against the frame (17) when said opening is closed, in use, and a magnet (23) for providing a magnetic field, and disposed at a side of the frame opposite to that against which the movable element (18) closes, the strength and/or the affect of which magnetic field on the movable element (18) can be varied to alter resistance of said element to movement thereof, **characterised in that** the magnetic means (23) is movable between one extreme position where it is fully shielded from said moveable element (18) by the frame (17), and thus has minimum effect on opening of the moveable element, and another extreme position where it is unshielded from said movable element (18) by the frame (17), and thus has maximum effect on opening of the movable element.

2. A valve as claimed in Claim 1, comprising counterbalance means which set the opening of the valve member at a predetermined pressure differential across the fluid flow opening, in use, when the strength of the magnetic field and/or its affect on the movable element (18) is adjusted to zero.

3. A valve as claimed in Claim 1 or Claim 2, wherein the magnet (23) is a permanent magnet slidable between said two extreme positions in a carriage (21) secured to said frame.

4. A valve as claimed in Claim 3, wherein the sliding movement of the magnet is controlled by operation of a control knob (29), through the intermediary of a control cable (31).

5. A valve as claimed in Claim 4, wherein the control knob (29) includes a cam surface acting on a slidable rod (33), movement of which controls movement of said control cable (31) and thus of said magnet (23), the rod (33) being biased to an extreme position corresponding to said fully shielded position of the magnet (23).

6. A valve as claimed in Claim 1 or Claim 2, wherein the strength of the magnet (23) can be varied.

7. A valve as claimed in any one of Claims 1 to 6, wherein the frame (17) has a profiled extension part (39) to allow a gradual change in the affect of the magnet (23) from its shielded to its unshielded states respectively.

8. A valve as claimed in any one of Claims 3 to 6, wherein the magnet has an iron attachment (40) secured thereto.

9. A valve as claimed in Claim 8, wherein the position of the iron attachment (40) is adjustable relative to said magnet (23).

10. A valve as claimed in Claim 1 or Claim 2, wherein a further magnet (41) is arranged to oppose said magnet.

11. A valve as claimed in Claim 10, wherein said further magnet (41) is movable relative to said magnet.

12. A valve as claimed in Claim 11, wherein said movement is towards and away from said magnet.

13. A valve as claimed in Claim 12, wherein said movement is from side-to-side.

14. A valve as claimed in Claim 12 or Claim 13, wherein said movement is effected by a control cable (43:43a).

15. A valve as claimed in Claim 1 or Claim 2, wherein the magnet is an electro-magnet (44).

16. A valve as claimed in Claim 15, wherein said electro-magnet (44) is fixed in position.

17. A valve as claimed in Claim 16, wherein the magnetic field strength of the electro-magnet (44) can be varied by a potentiometer (45).

18. A valve as claimed in Claim 17, wherein control of the potentiometer is by means of a control knob.

19. A valve as claimed in Claim 18, wherein the control knob includes a cam surface acting on a slidable rod, movement of which controls movement of a slider of the potentiometer (45).

20. A valve as claimed in Claim 18, wherein the rod is biased to an extreme position corresponding to the electro-magnet (44) being de-energised.

21. A valve as claimed in any one of Claims 17 to 20, comprising an integrated circuit delivering, in use, a constant current, the value of which is programmable with an external resistor.

22. A valve as claimed in Claim 21, wherein linear movement of a or the slider of the potentiometer is used to vary the output of the integrated circuit.

23. A valve as claimed in any one of Claims 18 to 20, or Claim 21 when dependent on Claims 18 to 20, wherein the control knob is part of an oil control valve (49) for supplying oil (50), in use, to an oil burner, a combustion chamber and/or flue of which is supplied by air through said fluid flow opening, in use.

24. A valve as claimed in Claim 23, wherein the control knob has a control spindle (51) which allows a slotted barrel (52) to vary its height in a sleeve (53) disposed in an oil chamber and connected to an outlet of the oil control valve, so that a greater or lesser length of the slot is exposed to oil in said chamber, thereby to vary the supply of oil to the burner.

25. A valve as claimed in Claim 24, wherein the barrel (52) is biased in a direction to expose a maximum length of said slot to said oil.

26. A valve as claimed in any one of Claims 23 to 25, wherein when the oil control valve (49) is de-energised the barrel (52) is held at its minimum setting.

27. A valve as claimed in Claim 26, wherein when the oil control valve is energised the barrel is released and biased to its manually positioned control setting.

28. A valve as claimed in Claim 1, wherein part (70) of the movable element (69) is arranged, in use, to move across a sector-shaped opening (71) in a housing (68), said opening defining said fluid flow opening.

29. A valve as claimed in Claim 28, wherein the movable element comprises a flap (69), pivoted, in use, in the housing (68) and at least one sector-shaped wing (70), variation of the magnetic field's strength or affect, in use, varying the resistance of the pivoted flap to movement and thus controlling the degrees of opening and closing of said fluid flow opening by said at least one wing.

30. A heating apparatus comprising a fuel burner, a combustion chamber, a flue for passage of combustion products leaving the combustion chamber, in use, and a draught/flue stabiliser for supplying exterior air to the combustion chamber and/or flue, **characterised by** the stabiliser comprising a valve as claimed in any one of Claims 1 to 22, or Claim 28 or Claim 29.

31. A heating apparatus comprising a valve as claimed in any one of Claims 23 to 27, wherein the flue is for passage of combustion products, from the oil burner, leaving the combustion chamber.

## Patentansprüche

1. Ventil, das für eine Montage an einer Fluidströmungsöffnung beim Gebrauch gestaltet ist und Folgendes umfasst: einen Rahmen (17), der ein bewegliches Element (18) schwenkbar hält, das die Öffnung öffnen oder schließen kann, wobei ein Teil des beweglichen Elementes (18) gegen den Rahmen (17) schließt, wenn die Öffnung beim Gebrauch geschlossen ist, und einen Magnet (23) zum Erzeugen eines Magnetfelds, der auf einer Seite des Rahmens gegenüber der angeordnet ist, gegen die das bewegliche Element (18) schließt, wobei die Stärke dieses Magnetfeldes und/oder sein Effekt auf das bewegliche Element (18) variiert werden kann/können, um den Bewegungswiderstand des Elementes zu verändern, **dadurch gekennzeichnet, dass** das magnetische Mittel (23) zwischen einer Endposition, in der es von dem Rahmen (17) völlig gegen das bewegliche Element (18) abgeschirmt ist und somit nur einen minimalen Effekt auf die Öffnung des beweglichen Elementes hat, und einer anderen Endposition beweglich ist, in der es nicht vom Rahmen (17) gegen das bewegliche Element (18) abgeschirmt ist und somit einen maximalen Effekt auf die Öffnung des beweglichen Elementes hat.

2. Ventil nach Anspruch 1, das ein Gegengewicht umfasst, das die Öffnung des Ventilelementes auf ein vorbestimmtes Druckdifferential über die Fluidströmungsöffnung beim Gebrauch bringt, wenn die Stärke des Magnetfeldes und/oder sein Einfluss auf das bewegliche Element (18) auf null eingestellt ist/sind.

3. Ventil nach Anspruch 1 oder Anspruch 2, wobei der Magnet (23) ein Permanentmagnet ist, der in einem am Rahmen befestigten Schlitten (21) zwischen den beiden Endpositionen verschiebbar ist.

4. Ventil nach Anspruch 3, wobei die Gleitbewegung des Magnets durch die Betätigung eines Bedienungsknopfes (29) mittels eines Steuerkabels (31) gesteuert wird.

5. Ventil nach Anspruch 4, wobei der Bedienungsknopf (29) eine auf einen verschiebbaren Stab (33) wirkende Nockenfläche beinhaltet, deren Bewegung die Bewegung des Steuerkabels (31) und somit des Magnets (23) steuert, wobei der Stab (33) in eine Endposition vorgespannt wird, die der völlig abgeschirmten Position des Magnets (23) entspricht.

6. Ventil nach Anspruch 1 oder Anspruch 2, wobei die Stärke des Magnets (23) variiert werden kann.

7. Ventil nach einem der Ansprüche 1 bis 6, wobei der Rahmen (17) einen profilierten Verlängerungsteil (39) hat, so dass der Effekt des Magneten (23) jeweils zwischen dem geschirmten und dem ungeschirmten Zustand allmählich verändert werden kann.

8. Ventil nach einem der Ansprüche 3 bis 6, wobei an dem Magnet ein Stück Eisen (40) befestigt ist.

9. Ventil nach Anspruch 8, wobei die Position des Eisenstücks (40) relativ zu dem Magnet (23) eingestellt werden kann.

10. Ventil nach Anspruch 1 oder Anspruch 2, wobei ein weiterer Magnet (41) gegenüber dem Magnet angeordnet ist.

11. Ventil nach Anspruch 10, wobei der weitere Magnet (41) relativ zu dem Magneten beweglich ist.

12. Ventil nach Anspruch 11, wobei die Bewegung zu dem Magneten hin und davon weg erfolgt.

13. Ventil nach Anspruch 12, wobei die Bewegung von einer Seite zur anderen erfolgt.

14. Ventil nach Anspruch 12 oder Anspruch 13, wobei die Bewegung durch ein Steuerkabel (43:43a) bewirkt wird.

15. Ventil nach Anspruch 1 oder Anspruch 2, wobei der Magnet ein Elektromagnet (44) ist.

16. Ventil nach Anspruch 15, wobei die Position des Elektromagnets (44) fest ist.

17. Ventil nach Anspruch 16, wobei die Magnetfeldstärke des Elektromagnets (44) mit einem Potentiometer (45) verändert werden kann.

18. Ventil nach Anspruch 17, wobei die Steuerung des Potentiometers mit einem Bedienungsknopf erfolgt.

19. Ventil nach Anspruch 18, wobei der Bedienungsknopf eine auf einen verschiebbaren Stab wirkende Nockenfläche beinhaltet, deren Bewegung die Bewegung eines Schiebers des Potentiometers (45) steuert.

20. Ventil nach Anspruch 18, wobei der Stab zu einer Endposition vorgespannt ist, die dem Aberregen des Elektromagnets (44) entspricht.

21. Ventil nach einem der Ansprüche 17 bis 20, das eine integrierte Schaltung umfasst, die beim Gebrauch einen konstanten Strom erzeugt, dessen Wert mit einem externen Widerstand programmierbar ist.

22. Ventil nach Anspruch 21, wobei eine lineare Bewegung eines oder des Schiebers des Potentiometers zum Variieren des Ausgangs der integrierten Schaltung verwendet wird.

23. Ventil nach einem der Ansprüche 18 bis 20 oder 21 in Abhängigkeit von den Ansprüchen 18 bis 20, wobei der Bedienungsknopf Teil eines Ölsteuerventils (49) zum Zuführen von Öl (50) beim Gebrauch zu einem Ölbrenner ist, dessen Brennkammer und/oder Flammrohr beim Gebrauch mit Luft durch die Fluidströmungsöffnung gespeist wird.

24. Ventil nach Anspruch 23, wobei der Bedienungsknopf eine Steuerspindel (51) hat, über die die Höhe einer geschlitzten Trommel (52) in einer Hülse (53) variiert werden kann, die in einer Ölkammer angeordnet und mit einem Auslass des Ölsteuerventils verbunden ist, so dass ein größeres oder kleineres Stück des Schlitzes mit Öl in der Kammer in Kontakt kommt, um **dadurch** die Zufuhr von Öl zu dem Brenner zu variieren.

25. Ventil nach Anspruch 24, wobei die Trommel (52) in einer Richtung vorgespannt ist, die ein maximales Stück des Schlitzes mit dem Öl in Kontakt bringt.

26. Ventil nach einem der Ansprüche 23 bis 25, wobei dann, wenn das Ölsteuerventil (49) aberregt ist, die Trommel (52) in ihrer Minimaleinstellung gehalten wird.

27. Ventil nach Anspruch 26, wobei dann, wenn das Ölsteuerventil aberregt wird, die Trommel freigegeben und in Richtung auf ihre manuell positionierte Steuereinstellung vorgespannt ist.

28. Ventil nach Anspruch 1, wobei ein Teil (70) des beweglichen Elementes (69) beim Gebrauch so angeordnet ist, dass es über eine sektorförmige Öffnung (71) in einem Gehäuse (68) bewegt wird, wobei die Öffnung die Fluidströmungsöffnung definiert.

29. Ventil nach Anspruch 28, wobei das bewegliche Element eine Klappe (69), die beim Gebrauch in dem Gehäuse (68) geschwenkt wird, und wenigstens einen sektorförmigen Flügel (70) umfasst, wobei durch eine Veränderung der Stärke oder des Effekts des Magnetfelds beim Gebrauch der Bewegungswiderstand der Schwenkklappe variiert und somit der Öffuungs- oder Schließgrad der Fluidströmungsöffnung durch den wenigstens einen Flügel gesteuert wird.

30. Heizvorrichtung, die einen Brennstoffbrenner, eine Brennkammer, ein Flammrohr für die Passage von die Brennkammer verlassenden Brennprodukten beim Gebrauch und einen Zug-/Flammrohr-Stabilisierer zum Zuführen von Außenluft zur Brennkammer und/oder zum Flammrohr umfasst, **dadurch gekennzeichnet, dass** der Stabilisator ein Ventil nach einem der Ansprüche 1 bis 22 oder Anspruch 28 oder Anspruch 29 umfasst.

31. Heizvorrichtung, die ein Ventil nach einem der Ansprüche 23 bis 27 umfasst, wobei das Flammrohr für die Passage von Brennprodukten aus dem Ölbrenner ist, die die Brennkammer verlassen.

## Revendications

1. Soupape destinée à être montée en service au niveau d'une ouverture d'écoulement de fluide, et comprenant un cadre (17) sur lequel est monté par pivotement un élément mobile (18) pouvant ouvrir et fermer ladite ouverture, une partie de l'élément mobile (18) assurant une fermeture contre le cadre (17) lorsque ladite ouverture est fermée en service, et un aimant (23) pour établir un champ magnétique, et agencé au niveau d'un côté du cadre opposé à celui contre lequel l'élément mobile (18) est fermé, l'intensité et/ou l'effet de ce champ magnétique sur l'élément mobile (18) pouvant être variés pour changer la résistance dudit élément à un déplacement correspondant, **caractérisée en ce que** le moyen magnétique (23) peut se déplacer entre une position extrême, dans laquelle il est complètement blindé par rapport audit élément mobile (18) par le cadre (17), exerçant ainsi un effet minimal sur l'ouverture de l'élément mobile, et une autre position extrême, dans laquelle il n'est pas blindé par rapport audit élément mobile (18) par le cadre (17), exerçant ainsi un effet maximal sur l'ouverture de l'élément mobile.

2. Soupape selon la revendication 1, comprenant un moyen d'équilibrage soumettant l'ouverture de l'élément de soupape à une différence de pression prédéterminée à travers l'ouverture d'écoulement de fluide lorsque l'intensité du champ magnétique et/ou son effet sur l'élément mobile (18) sont ajustés à zéro.

3. Soupape selon les revendications 1 ou 2, dans laquelle l'aimant (23) est un aimant permanent pouvant glisser entre les deux positions extrêmes dans un chariot (21) fixé sur ledit cadre.

4. Soupape selon la revendication 3, dans laquelle le déplacement par glissement de l'aimant est contrôlé par l'actionnement d'un bouton de commande (29), par l'intermédiaire d'un câble de commande (31).

5. Soupape selon la revendication 4, dans laquelle le bouton de commande (29) englobe une surface à came agissant sur une tige coulissante (33), dont le déplacement contrôle le déplacement dudit câble de commande (31) et donc dudit aimant (23), la tige (33) étant poussée vers une position extrême correspondant à ladite position complètement blindée de l'aimant (23).

6. Soupape selon les revendications 1 ou 2, dans laquelle l'intensité de l'aimant (23) peut être variée.

7. Soupape selon l'une quelconque des revendications 1 à 6, dans laquelle le cadre (17) comporte une partie d'extension profilée (39) pour permettre un changement progressif de l'effet de l'aimant (23) respectivement de sa position blindée vers sa position non blindée.

8. Soupape selon l'une quelconque des revendications 3 à 6, dans laquelle l'aimant comporte un élément en fer (40) qui y est fixé.

9. Soupape selon la revendication 8, dans laquelle la position de l'élément en fer (40) peut être ajustée par rapport audit aimant (23).

10. Soupape selon les revendications 1 ou 2, dans laquelle un aimant additionnel (41) est destiné à s'opposer audit aimant.

11. Soupape selon la revendication 10, dans laquelle ledit aimant additionnel (41) peut se déplacer par rapport audit aimant.

12. Soupape selon la revendication 11, dans laquelle ledit déplacement se fait vers ledit aimant et à l'écart de celui-ci.

13. Soupape selon la revendication 12, dans laquelle ledit déplacement se fait d'un côté vers l'autre.

14. Soupape selon les revendications 12 ou 13, dans laquelle ledit déplacement est effectué par un câble de commande (43; 43a).

15. Soupape selon les revendications 1 ou 2, dans laquelle l'aimant est un électroaimant (44).

16. Soupape selon la revendication 15, dans laquelle ledit électroaimant (44) et fixé dans sa position.

17. Soupape selon la revendication 16, dans laquelle l'intensité du champ magnétique de l'électroaimant (44) peut être variée par un potentiomètre (45).

18. Soupape selon la revendication 17, dans laquelle le potentiomètre est commandé par l'intermédiaire d'un bouton de commande.

19. Soupape selon la revendication 18, dans laquelle le bouton de commande englobe une surface à came agissant sur une tige coulissante, dont le déplacement contrôle le déplacement d'un coulisseau du potentiomètre (45).

20. Soupape selon la revendication 18, dans laquelle la tige est poussée vers une position extrême correspondant à une désexcitation de l'électroaimant (44).

21. Soupape selon l'une quelconque des revendications 17 à 20, comprenant un circuit intégré fournissant en service un courant constant, dont la valeur est programmable par une résistance externe.

22. Soupape selon la revendication 21, dans laquelle le déplacement linéiaire d'un ou du coulisseau du potentiomètre sert à varier la sortie du circuit intégré.

23. Soupape selon l'une quelconque des revendications 18 à 20, ou selon la revendication 21, dépendant des revendications 18 à 20, dans laquelle le bouton de commande fait partie d'une soupape de commande d'huile (49) destinée à alimenter en service un brûleur à huile en huile (50), dont une chambre de combustion et/ou un carneau sont alimentés en air à travers ladite ouverture d'écoulement de fluide en service.

24. Soupape selon la revendication 23, dans laquelle le bouton de commande comporte une tige de commande (51) permettant de varier la hauteur d'un cylindre à fentes (52) dans un manchon (53) agencé dans une chambre à huile et connecté à une sortie de la soupape de commande d'huile, de sorte qu'une longueur plus ou moins grande de la fente est exposée à l'huile dans ladite chambre, pour varier ainsi l'alimentation en huile du brûleur.

25. Soupape selon la revendication 24, dans laquelle le cylindre (52) est poussé dans une direction destinée à exposer une longueur maximale de ladite fente à ladite huile.

26. Soupape selon l'une quelconque des revendications 23 à 25, dans laquelle, la soupape de commande d'huile (49) étant désexcitée, le cylindre (52) est maintenu au niveau de son ajustement minimal.

27. Soupape selon la revendication 26, dans laquelle, la soupape de commande d'huile étant excitée, le cylindre est dégagé et poussé vers son ajustement de commande à positionnement manuel.

28. Soupape selon la revendication 1, dans laquelle une partie (70) de l'élément mobile (69) est destinée en service à se déplacer à travers l'ouverture en forme de secteur (71) dans un boîtier (68), ladite ouverture définissant ladite ouverture d'écoulement de fluide.

29. Soupape selon la revendication 28, dans laquelle l'élément mobile comprend un volet (69) pivoté en service dans le boîtier (68), et au moins une aile en forme de secteur (70), la variation de l'intensité ou de l'effet du champ magnétique en service entraînant une variation de la résistance du volet à pivotement au déplacement, contrôlant ainsi les degrés d'ouverture et de fermeture de ladite ouverture d'écoulement de fluide par ladite au moins une aile.

30. Appareil de chauffage, comprenant un brûleur de combustible, une chambre de combustion, un carneau de passage des produits de la combustion sortant de la chambre de combustion en service, et un stabilisateur de tirage/ carneau pour amener de l'air extérieur dans la chambre de combustion et/ou le carneau, **caractérisé en ce que** le stabilisateur comprend une soupape selon l'une quelconque des revendications 1 à 22 ou selon les revendications 28 ou 29.

31. Appareil de chauffage comprenant une soupape selon l'une quelconque des revendications 23 à 27, dans lequel le carneau sert à assurer le passage des produits de combustion provenant du brûleur à huile et quittant la chambre de combustion.
